# EUROPÄISCHE PATENTSCHRIFT

(11) **EP 3 628 985 B1**
(45) Veröffentlichungstag und Bekanntmachung des Hinweises auf die Patenterteilung: **13.09.2023**
(21) Anmeldenummer: 18197579.8
(22) Anmeldetag: 28.09.2018
(51) Int. Cl.: G01F 23/80, G01F 23/284, G01F 23/14, G01F 23/24, G01F 23/26

(54) **FÜLLSTANDMESSGERÄT MIT EINEM KONTINUIERLICH MESSENDEN FÜLLSTANDSENSOR UND VERFAHREN ZUM BETREIBEN EINES SOLCHEN FÜLLSTANDMESSGERÄTS**
FILL LEVEL MEASURING DEVICE USING A CONTINUOUSLY MEASURING FILL LEVEL SENSOR AND METHOD FOR OPERATING SUCH A FILL LEVEL MEASURING DEVICE
APPAREIL DE MESURE DE NIVEAU DE REMPLISSAGE DOTÉ D'UN CAPTEUR DE NIVEAU DE REMPLISSAGE À MESURE CONTINUE ET PROCÉDÉ DE FONCTIONNEMENT D'UN TEL APPAREIL DE MESURE DE NIVEAU DE REMPLISSAGE

(43) Veröffentlichungstag der Anmeldung: 01.04.2020
(73) Patentinhaber: VEGA Grieshaber KG, 77709 Wolfach (DE)
(72) Erfinder: Haas, Jürgen, 77709 Oberwolfach (DE); Motzer, Jürgen, 77723 Gengenbach (DE); Grießbaum, Karl, 77796 Mühlenbach (DE); Skowaisa, Jürgen, 77761 Schiltach (DE)
(74) Vertreter: Patentanwälte Bauer Vorberg Kayser

(56) Entgegenhaltungen:
- WO-A1-2012/159682
- US-A1- 2013 076 559
- US-A1- 2015 253 176

## Beschreibung

Die vorliegende Erfindung betrifft ein Füllstandmessgerät mit einem kontinuierlich messenden Füllstandsensor gemäß dem Oberbegriff des Patentanspruchs 1 sowie ein Verfahren zum Betreiben eines solchen Füllstandmessgeräts gemäß dem Oberbegriff des Patentanspruchs 9.

Füllstandmessgeräte mit kontinuierlich messenden Füllstandsensoren sind grundsätzlich aus dem Stand der Technik bekannt.

US 2015/253176 A1 betrifft ein Radar-Füllstandmessgerät und ein Verfahren zur Bestimmung des Füllstands eines Produkts in einem Tank.

Die hier zugrundeliegenden Füllstandmessgeräte werden zur kontinuierlichen Füllstandmessung eingesetzt. Dabei wird mithilfe unterschiedlicher Messverfahren die Füllhöhe eines Mediums in einem Tank, Becken oder Silo erfasst und in ein elektronisches Signal umgewandelt. Kontinuierlich messende Füllstandsensoren zeichnen sich dadurch aus, dass Füllstände nicht nur an diskreten, vordefinierten Füllständen, sog. Grenzständen, erfasst werden, sondern eine kontinuierliche Messung von Füllständen, d.h. insbesondere beliebigen Füllständen, möglich ist. Typische Messverfahren, sind laufzeitbasierte Verfahren wie Radar oder Ultraschall, hydrostatische Verfahren, wie die Druckmessung oder kapazitive oder radiometrische Verfahren. Füllstandmessgeräte mit kontinuierlich messenden Füllstandsensoren werden im Stand der Technik bereits in Kombination mit Grenzstandschaltern zur Überwachung von Regenüberlaufbecken eingesetzt.

Ein Regenüberlaufbecken ist eine spezifische Form eines Entlastungsbauwerks für Mischsysteme mit vorgeschaltetem Speichervolumen, bestehend aus Ablauf zur Kläranlage und Überlauf zum Gewässer. In Mischsystemen wird Regen- und Schmutzwasser gemeinsam einem Kanal und damit dem Klärwerke zugeführt. Zur Entlastung der Mischwasserkanalisation und der Kläranlage bei starken Regenereignissen müssen in diesem System Stauräume und Entlastungsbauwerke vorgehalten werden. Die Inhalte der Stauräume werden nach Regenende zur Kläranlage abgeleitet und dort gereinigt. Nur der Anteil, der das Rückhaltevolumen der Stauräume übersteigt, wird als stark verdünntes Mischwasser am Regenüberlauf in ein Gewässer eingeleitet.

Um das Betriebsverhalten von Regenüberlaufbecken bei Regen überwachen zu können, werden viele Becken mit Messgeräten ausgerüstet. Diese Überwachungsgeräte protokollieren die Häufigkeit und Dauer von Einstau- und Entlastungsereignissen. Einige ermitteln auch das bei Starkregen übergelaufene Mischwasservolumen, d.h. das Wasservolumen, das von dem Regenrückhaltebecken nicht aufgenommen werden konnte und daher in ein Gewässer abgegeben werden musste.

Regenüberlaufbecken liegen häufig außerhalb von Ortschaften und weisen damit keinen Anschluss an ein Energieversorgungsnetz auf. Netzgebundene Messtechnik ist damit nur unter hohen Investitionskosten in einen Netzanschluss einsetzbar und daher häufig unerwünscht. Es werden daher häufig Batteriebetriebenen und/oder Solarbetriebene Messgeräte eingesetzt. Der Energieverbrauch dieser Messgeräte ist daher ein wichtiges Entscheidungskriterium.

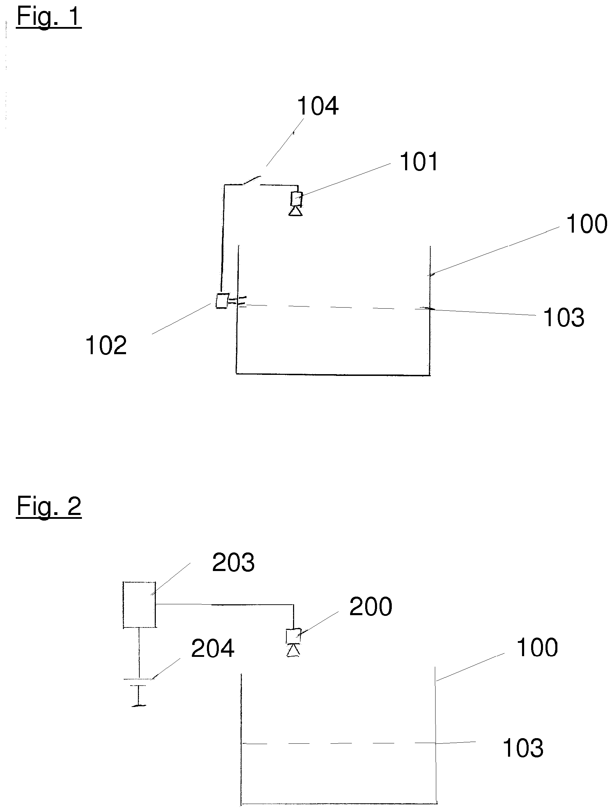

Eine schematische Darstellung eines Regenüberlaufbeckens 100 mit einer Messanordnung gemäß dem Stand der Technik ist in Figur 1 dargestellt.

Für die Überwachung eines Füllstands von Regenüberlaufbecken 100, werden im Stand der Technik mehrere Sensoren 101, 102 eingesetzt. Zum einen ein kontinuierlich messender Füllstandsensor 101 und ein Grenzstandsensor 102. Abhängig von einem Bedeckungszustand des Grenzstandsensors 102 (bedeckt / unbedeckt) wird der kontinuierlich messende Sensor 101 über eine Schalteinheit 104aktiviert. Dieser meldet dann den Füllstand an eine Leitstelle oder dergleichen weiter.

Hintergrund für diesen Aufbau ist, dass im Normalfall die Regenüberlaufbecken 100 leer bzw. nur teilweise gefüllt sind und sich nur bei Regen oder Unwetterereignissen schnell füllen und so zur Einsparung von Energie der kontinuierlich messende Füllstandsensor 101 erst bei Überschreiten eines bestimmten Grenzstandes, der mit dem Grenzstandsensor 102 überwacht wird, notwendig ist.

An den aus dem Stand der Technik bekannten Systemen wird die Verwendung von zwei unterschiedlichen Sensortypen als nachteilig empfunden, da dies einen erhöhten Wartungs- und Installationsaufwand bedeutet. Ferner ist der Energieverbrauch von Grenzstandsensoren, bspw. Vibrationsgrenzstandsensoren relativ hoch, sodass diese bei batteriebetriebenen Messanordnungen nicht optimal sind.

Es ist die Aufgabe der vorliegenden Erfindung ein Füllstandmessgerät sowie ein Verfahren zum Betreiben eines Füllstandmessgeräts bereitzustellen, die die Nachteile aus dem Stand der Technik nicht aufweisen.

Diese Aufgabe wird durch ein Füllstandmessgerät mit den Merkmalen des Patentanspruchs 1 und ein Verfahren zum Betreiben eines Füllstandmessgeräts mit den Merkmalen des Patentanspruchs 11 gelöst. Vorteilhafte Weiterbildungen der Erfindung sind Gegenstand abhängiger Patentansprüche.

Ein erfindungsgemäßes Füllstandmessgerät mit einem einzigen kontinuierlich messenden Füllstandsensor und wenigstens einem Prozessor zur Steuerung des Füllstandsensors und zur Auswertung der Messergebnisse, zeichnet sich dadurch aus, dass das Füllstandmessgerät wenigstens einen ersten Betriebsmodus und einen zweiten Betriebsmodus zur Bestimmung des Füllstandes aufweist, wobei das Messgerät in dem ersten Betriebsmodus eine erste Messrate und eine erste Messgenauigkeit aufweist und in dem zweiten Betriebsmodus eine zweite Messrate und eine zweite Messgenauigkeit aufweist, wobei die erste Messrate geringer als die zweite Messrate ist und/oder die erste Messgenauigkeit geringer als die zweite Messgenauigkeit ist.

Das erfindungsgemäße Füllstandmessgerät weist damit lediglich einen einzigen kontinuierlich messenden Füllstandsensor zur Überwachung des Pegels bzw. Füllstands auf und benötigt nicht wie die Messanordnungen im Stand der Technik noch einen zweiten Sensor, insbesondere einen Grenzstandsensor. Auf diese Weise wird die Anfangsinvestition reduziert und ein Wartungsaufwand im Betrieb des Füllstandmessgeräts verringert. Dadurch, dass nur noch ein einziger Sensor zum Einsatz kommt, ist es einfacher möglich, diesen unabhängig von einer externen Energieversorgung, bspw. batteriebetrieben auszugestalten. Alternativ sind auch Ausgestaltungen mit einem Energie-Harvester und einer Batteriepufferung denkbar.

Durch die Ausgestaltung des Füllstandmessgeräts mit einem ersten Betriebsmodus und einem zweiten Betriebsmodus, wobei das Messgerät in dem ersten Betriebsmodus eine erste Messrate und eine erste Messgenauigkeit aufweist und in dem zweiten Betriebsmodus eine zweite Messrate und eine zweite Messgenauigkeit aufweist, wobei die erste Messrate geringer als die zweite Messrate ist und/oder die erste Messgenauigkeit geringer als die zweite Messgenauigkeit ist, wird eine Anordnung geschaffen, die in dem ersten Betriebsmodus aufgrund der geringeren Messrate und/oder Messgenauigkeit einen reduzierten Energieverbrauch aufweist. Bei einem Einsatzszenario, wie vorliegend in Bezug auf Regenüberlaufbecken beschrieben, bei dem der Füllstand einen Großteil der Zeit, bspw. wenigstens 95 %, vorzugsweise 99 % der Zeit so ist, dass die geringere Messrate und/oder Messgenauigkeit ausreichend ist, das Füllstandmessgerät also in dem ersten Betriebsmodus betrieben werden kann, ist ein sehr energiesparender Betrieb des Füllstandmessgeräts möglich. Auf diese Weise wird ein stromnetzunabhängiger, insbesondere batteriebetriebener Einsatz des Füllstandmessgeräts begünstigt.

Weitere Einsatzszenarien könne mobile Anwendungen sein, bei denen bspw. ein Container über einen längeren Zeitraum hinweg entleert oder befüllt wird und die höhere Messrate und/oder Messgenauigkeit, also der zweite Betriebsmodus, nur innerhalb der letzten 10% der Entleerung und/oder Befüllung benötigt wird. Die Schwelle hängt stark von der jeweiligen Anwendung ab, je nach Befüll- oder Entleergeschwindigkeit kann die Schwelle höher oder niedriger sein. Beispielsweise muss der Nachlauf einer Pumpe bei der Bestimmung der Schwelle berücksichtig werden. Auch in diesem Szenario kann auf diese Weise ein Batteriebetrieb begünstigt werden.

Es sei an dieser Stelle angemerkt, dass die geringere Messrate und/oder Messgenauigkeit in dem ersten Betriebsmodus explizit bedeutet, dass in dem ersten Betriebsmodus Messungen stattfinden. Die geringere Messrate und/oder Messgenauigkeit bedeutet also explizit nicht, dass in dem ersten Betriebsmodus keine Messungen stattfinden.

Beispielsweise kann die erste Messrate 10% oder weniger der zweiten Messrate betragen.

Beispielsweise kann in dem ersten Betriebsmodus also einmal pro Stunde eine Messung erfolgen und im zweiten Betriebsmodus z.B. zweimal pro Sekunde gemessen werden.

Typischerweise kann die Messrate in den ersten Betriebsmodus zwischen 0,01 Messungen pro Minute und 1 Messung pro Minute, beispielsweise bei 1/60 Messungen pro Minute oder 0,1 Messungen pro Minute liegen. In dem zweiten Betriebsmodus kann die Messrate vorzugsweise größer als 1 Messung pro Sekunde sein.

Idealerweise kann die erste Messrate in dem ersten Betriebsmodus und die zweite Messrate in dem zweiten Betriebsmodus kundenseitig vorgebbar sein.

Das Füllstandmessgerät weist erfindungsgemäß einen ersten Prozessor und einen zweiten Prozessor auf, wobei der erste Prozessor einen geringeren Energieverbrauch als der zweite Prozessor aufweist und in dem ersten Betriebsmodus der erste Prozessor aktiviert ist und in dem zweiten Betriebsmodus wenigstens der zweite Prozessor aktiviert ist.

Durch eine Ausgestaltung des Füllstandmessgeräts mit zwei unterschiedlichen Prozessoren, beispielsweise einem ersten Prozessor mit einer Leistung von weniger als 1mW und einem zweiten Prozessor mit einer Leistung von mehr als 30mW, wobei der erste Prozessor in dem ersten Betriebsmodus und der zweite Prozessor in dem zweiten Betriebsmodus aktiviert ist. Dadurch, dass in dem ersten Betriebsmodus eine geringere Messrate und/oder Messgenauigkeit notwendig ist, kann der erste Prozessor mit einer geringeren Rechenleistung und damit gleichzeitig energiesparender gewählt werden. Wird ein vorgegebener Füllstand über- oder unterschritten, so wird der zweite Prozessor aktiviert und die Messrate und/oder Messgenauigkeit entsprechend erhöht. Der zweite Prozessor kann mit einer aus dem Stand der Technik üblichen Rechenleistung von 20MHz und mehr und einem entsprechenden Energieverbrauch von 30mW oder mehr gewählt sein.

Um den Energiebedarf des Füllstandmessgeräts in dem ersten Betriebsmodus zu optimieren kann der zweite Prozessor in dem ersten Betriebsmodus deaktiviert sein. Eine vollständige Deaktivierung des zweiten Prozessors in dem ersten Betriebsmodus hat den Vorteil, dass auch eine Standby-Energie, die der zweite Prozessor in einem Energiesparmodus benötigen würde, eingespart wird. Der zweite Prozessor kann bspw. vollständig von einer Stromversorgung, bspw. über ein Schaltelement, getrennt sein.

Detektiert der zweite Prozessor das Über- oder Unterschreiten des vorgegebenen Füllstands, so ist der zweite Prozessor für den Übergang von dem ersten Betriebsmodus in den zweiten Betriebsmodus durch den ersten Prozessor aktivierbar. Zusätzlich kann der erste Prozessor durch den zweiten Prozessor aktivierbar ausgestaltet sein, sodass bei einem Übergang von dem zweiten Betriebsmodus in den ersten Betriebsmodus der erste Prozessor aktiviert wird und sich der zweite Prozessor deaktiviert, sobald der erste Prozessor aktiviert ist.

Durch eine derartige Ausgestaltung wird ein gleichzeitiger Betrieb beider Prozessoren vermieden und so weiter Energie gespart.

Alternativ kann der erste Prozessor die Messrate überwachen und abhängig vom Betriebsmodus den zweiten Prozessor häufiger oder weniger häufiger für eine Messung aktivieren. Die Messungen werden in dieser Variante immer durch den zweiten Prozessor durchgeführt, wobei durch den ersten Prozessor die Messrate vorgegeben wird und der zweite Prozessor zwischen den einzelnen Messungen, insbesondere im ersten Betriebsmodus, in einen Ruhezustand versetzt oder deaktiviert wird.

In einer erfindungsgemäßen Alternative weist das Füllstandmessgerät einen einzigen Prozessor mit wenigstens zwei Betriebszuständen auf, wobei der Prozessor in dem ersten Betriebszustand einen geringeren Energieverbrauch als in dem zweiten Betriebszustand aufweist und sich der Prozessor in dem ersten Betriebsmodus in dem ersten Betriebszustand befindet und in dem zweiten Betriebsmodus in dem zweiten Betriebszustand befindet.

Durch einen derartigen Prozessor mit unterschiedlichen Betriebszuständen kann ebenfalls ein Energiespareffekt erzielt werden, wobei der erste Betriebszustand des Prozessors einem Energiesparzustand mit verringerter Rechenleistung entspricht. Der zweite Betriebszustand entspricht einem regulären Betrieb des Prozessors, wobei die volle Rechenleistung zur Verfügung steht.

In einer vorteilhaften Ausgestaltung kann ein Wechsel von dem ersten Betriebsmodus in den zweiten Betriebsmodus bei Unterschreiten eines festgelegten ersten Füllstands und/oder bei Überschreiten eines festgelegten zweiten Füllstands erfolgen und ein Wechsel von dem zweiten Betriebsmodus in den ersten Betriebsmodus bei Überschreiten des festgelegten ersten Füllstands und/oder bei Unterschreiten des festgelegten zweiten Füllstands erfolgen.

Auf diese Weise wird die höhere Messrate und/oder Messgenauigkeit nur in den Situationen aktiviert, in denen ein Überfüllen oder Leerlaufen des überwachten Behältnisses droht. Ansonsten wird in dem ersten Betriebsmodus durch die geringere Messrate und/oder Messgenauigkeit Energie gespart.

Um ein zu häufiges Hin- und Herspringen zwischen den beiden Betriebsmodi zu vermeiden ist es sinnvoll, wenn der Wechsel unter Berücksichtigung einer Hysterese erfolgt.

In dem ersten Betriebsmodus kann eine Füllstandmessung zyklisch, insbesondere alle 1 bis 5 Minuten erfolgen. Die Messrate, also wie häufig pro Zeiteinheit gemessen wird kann fest vorgegeben sein oder auf Basis des in der letzten Messung ermittelten Füllstandes festgelegt werden. So kann bspw. erreicht werden, dass auch in dem Energiesparmodus, häufigere Messungen erfolgen, wenn sich der gemessene Füllstand an einen der vorbestimmten Grenzstände annähert. Zusätzlich oder alternativ kann die minimale Messrate so vorgegeben sein, dass ausgehend von dem zuletzt ermittelten Füllstand selbst bei maximal zulässiger Befüll- oder Entleergeschwindigkeit noch vor Erreichen der vorbestimmten Grenzstände eine erneute Messung erfolgt. Auf diese Weise kann verhindert werden, dass in dem ersten Betriebsmodus der überwachte Behälter dennoch leer- oder überläuft, ohne, dass dies dokumentiert oder verhindert wird.

In einer bevorzugten Ausgestaltungsform ist das Füllstandmessgerät als Radarfüllstandmessgerät ausgebildet. Radarfüllstandmessgeräte sind einfach anzubringen, und weisen eine hohe Messgenauigkeit auf. Ferner können Radarsensoren sehr energiesparend betrieben werden.

Das Füllstandmessgerät kann bspw. als Einweggerät mit einer, insbesondere fest in dem Gerät verbauten Batterie ausgebildet sein. Bspw. ist es denkbar, ein Füllstandmessgerät mit einer fest in dem Gerät verbauten, insbesondere verlöteten und verschweißten Energiequelle, bspw. einer Lithium-Ionen-Batterie auszustatten, ähnlich, wie dies im Stand der Technik für Rauchwarnmelder bekannt ist. Sensoren mit fest verbauter Batterie, können bspw. auch fest in einem bspw. transportablen Behälter verbaut, bspw. mit diesem Verklebt werden.

Zusätzlich kann es sinnvoll sein, wenn das Füllstandmessgerät ein energiesparendes Funkmodul, bspw. ein Mobilfunkmodul, ein Bluetooth-Low-Energy-Modul oder ein energiesparendes WiFi-Modul aufweist, um die ermittelten Daten an eine übergeordnete Einheit, bspw. eine Leitwarte zu übermitteln.

Ferner kann das Füllstandmessgerät einen Datenlogger, d.h. einen Speicher aufweisen, in dem mehrere Messwerte, bspw. wenn keine Verbindung zu der übergeordneten Einheit besteht, oder wenn eine solche Verbindung aus Gründen des Energiesparens nur selten aufgebaut werden soll, zwischengespeichert werden.

Ein erfindungsgemäßes Verfahren zum Betreiben eines Füllstandmessgeräts mit einem einzigen kontinuierlich messenden Füllstandsensor und wenigstens einem Prozessor zur Steuerung des Füllstandsensors und zur Auswertung der Messergebnisse zeichnet sich dadurch aus, dass das Füllstandmessgerät wenigstens einen ersten Betriebsmodus und einen zweiten Betriebsmodus zur Bestimmung des Füllstandes aufweist, wobei das Messgerät in dem ersten Betriebsmodus mit einer ersten Messrate und einer ersten Messgenauigkeit betrieben wird und in dem zweiten Betriebsmodus mit einer zweiten Messrate und einer zweiten Messgenauigkeit betrieben wird, wobei die erste Messrate geringer als die zweite Messrate ist und/oder die erste Messgenauigkeit geringer als die zweite Messgenauigkeit ist.

Dadurch, dass das Füllstandmessgerät in dem ersten Betriebsmodus mit einer geringeren Messrate und/oder einer geringeren Messgenauigkeit als in dem zweiten Betriebsmodus betrieben wird, sinkt der Energieverbrauch des Füllstandmessgerätes erheblich, sodass ein bspw. batteriebetriebenes Gerät deutlich länger eingesetzt werden kann.

In einer Weiterbildung kann das Füllstandmessgerät wenigstens einen ersten Prozessor und einen zweiten Prozessor aufweisen, wobei der erste Prozessor einen geringeren Energieverbrauch als der zweite Prozessor aufweist, wobei in dem ersten Betriebsmodus der erste Prozessor aktiviert wird und in dem zweiten Betriebsmodus wenigstens der zweite Prozessor aktiviert wird.

Dadurch, dass in dem ersten Betriebsmodus nur der erste Prozessor, der einen geringeren Energieverbrauch aufweist, aktiviert wird, kann in dem ersten Betriebsmodus im Vergleich zum zweiten Betriebsmodus deutlich Energie eingespart werden. Typischerweise ist der erste Prozessor dann aufgrund eines geringeren Prozessortaktes aber auch weniger leistungsfähig als der zweite Prozessor, sodass dieser mit einer geringeren Messrate und/oder einer geringeren Messgenauigkeit bei der Messwertbestimmung betrieben wird.

Der zweite Betriebsmodus kann bspw. bei Unterschreiten eines ersten festgelegten Füllstands und/oder bei Überschreiten eines zweiten festgelegten Füllstands aktiviert werden, sodass bspw. ein Leerlaufen und/oder Überlaufen des überwachten Behältnisses vermieden oder detektiert werden kann. Es können aber auch andere vorgegebene Füllstände überwacht werden, bspw. ein Füllstandfenster vom Überschreiten eines ersten festgelegten Füllstandes bis zum Überschreiten eines zweiten Festgelegten Füllstandes.

Um ein zu häufiges Wechseln von dem ersten in den zweiten Betriebsmodus und umgekehrt bei Füllstandschwankungen um den vorgegebenen Füllstand herum zu vermeiden, kann vorgesehen sein, dass der erste Betriebsmodus bei Überschreiten des ersten Füllstands und/oder bei Unterschreiten des zweiten Füllstands mit einer Hysterese aktiviert und/oder deaktiviert wird.

Um weiter Energie zu sparen kann das Füllstandmessgerät in dem ersten Betriebsmodus jeweils nach einer Messung für eine vorgegebene Zeit deaktiviert oder in einen Schlafmodus versetzt werden. Auf diese Weise wird nur ein reduzierter Energiebedarf für den Betrieb einer Aufweckschaltung benötigt, sodass der Energieverbrauch des Füllstandmessgeräts nochmals reduziert wird.

Die vorliegende Erfindung wird nachfolgend anhand von Ausführungsbeispielen unter Bezugnahme auf die beigefügten Figuren eingehend erläutert. Es zeigen:
- Figur 1: eine schematische Darstellung eines Regenüberlaufbeckens mit einer Messanordnung gemäß dem Stand der Technik (schon behandelt),
- Figur 2: das Regenüberlaufbecken aus Figur 1 mit einer Messanordnung gemäß der vorliegenden Anmeldung,
- Figur 3: Messzyklen in den unterschiedlichen Betriebsmodi,
- Figur 4: die Messunsicherheit in den unterschiedlichen Betriebsmodi,
- Figur 5: eine Ausgestaltung mit zwei Prozessoren und
- Figur 6: eine alternative Ausgestaltung mit zwei Prozessoren.

In den Figuren bezeichnen - soweit nicht anders angegeben - gleiche Bezugszeichen gleiche Komponenten mit gleicher Funktion.

Figur 2 zeigt die Überwachung eines Regenüberlaufbeckens 100 mit einem einzigen kontinuierlich messenden Füllstandsensor 200. Der kontinuierlich messende Füllstandsensor 200 ist so oberhalb des Regenüberlaufbeckens 100 positioniert, dass ein ausgesendetes Messsignal, vorliegend ein Radarsignal eine Oberfläche eines in dem Regenüberlaufbecken 100 befindlichen Mediums ungestört erreicht und so eine Laufzeitmessung und damit eine Pegelbestimmung möglich ist. Dadurch, dass nur noch ein einziger kontinuierlich messender Füllstandsensor 200 eingesetzt wird, können erheblich Anschaffungs- und Installationskosten gespart werden und es reduziert sich der Wartungsaufwand im Betrieb des Regenüberlaufbeckens 100. Der vorliegend dargestellte Füllstandsensor 200 ist über eine Batterie 204 mit Energie versorgt.

Die von dem kontinuierlich messender Füllstandsensor 200 ermittelten Messwerte werden über eine vorliegend nicht explizit dargestellte Funkschnittstelle in einer Messelektronik 203 an eine übergeordnete Einheit, bspw. eine Leitstelle, weitergeleitet, wo die Messwerte gespeichert und ausgewertet werden.

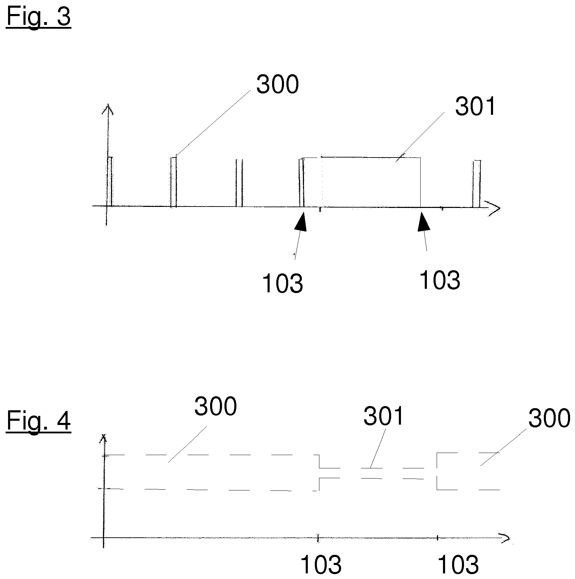

In Figur 3 ist beispielhaft dargestellt, wie das Füllstandmessgerät in den verschiedenen Betriebsmodi misst. In einem ersten Betriebsmodus 300, der aktiviert ist, solange der Füllstand in dem Regenüberlaufbecken 100 unter einem vorher festgelegten Wert 103 ist, weist der kontinuierlich messender Füllstandsensor 200 eine reduzierte Messrate und Messgenauigkeit auf und wird zur Messung nur kurz aktiviert und sobald der Füllstand erfasst und an die Leitstelle abgesetzt wurde, wird der Sensor wieder deaktiviert bzw. in einen Schlafmodus versetzt. In einem zweiten Betriebsmodus 301, der aktiviert wird, sobald der Füllstand den festgelegten Wert überschreitet, wird das Füllstandmessgerät dauerhaft betrieben und ermittelt permanent oder im Vergleich zu dem ersten Betriebsmodus 300 wenigstens deutlich engmaschiger Füllstandmesswerte.

Aufgrund der der geringeren Anforderungen an die Messgenauigkeit kann im ersten Betriebsmodus 300 ein "ungenauerer" Messwert 400 ermittelt werden, d.h. dass eine Messunsicherheit, um die der ermittelte Messwert schwankt, größer sein kann als in dem zweiten Betriebsmodus 301.

Sobald der vordefinierte Füllstand 103 überschritten wird wechselt das Füllstandmessgerät in den zweiten Betriebsmodus 301. In diesem misst es kontinuierlich bzw. (abhängig von der Anwendung) mit einer deutlich höheren Aktualisierungsrate. Da ein volles Regenüberlaufbecken 100 einen kritischen Fall darstellt (Überschwemmung), sind die Anforderungen an den Messwert hinsichtlich Messrate und Messgenauigkeit deutlich höher. Beispielsweise kann in dem ersten Betriebsmodus 300 die Messgenauigkeit ±10 cm, und in dem zweiten Betriebsmodus 301 die ±2mm betragen. Auch die Messrate ist unterschiedlich, so beträgt die Messrate in dem ersten Betriebsmodus 300 0,1-1 Messungen pro Minute und in dem zweiten Betriebsmodus 301 2 Messungen pro Sekunde.

Sobald der vordefinierte Füllstand 103 wieder unterschritten wird, wechselt das Füllstandmessgerät wieder in den ersten Betriebsmodus 300 um möglichst wenig Energie zu verbrauchen.

In Figur 4 ist die Messgenauigkeit des Füllstandmessgeräts abhängig vom Betriebsmodus veranschaulicht. Dargestellt ist jeweils die Schwankungsbreite des ermittelten Füllstands. Im ersten Betriebsmodus 300 ist die Schwankungsbreite oder in anderen Worten die Messunsicherheit deutlich größer als in dem zweiten Betriebsmodus 301.

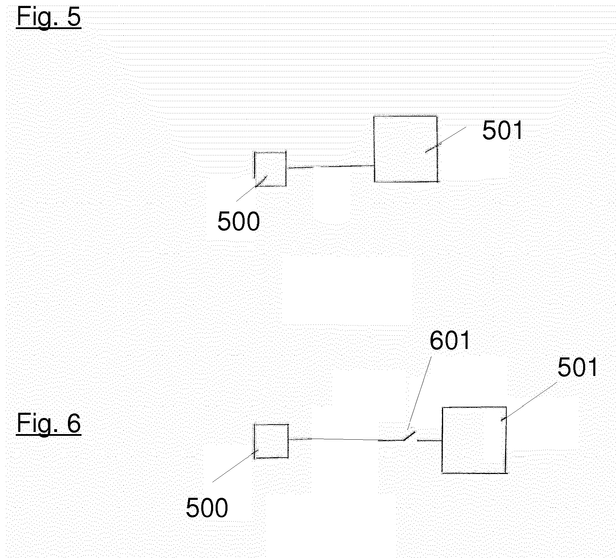

In Figur 5 ist eine Ausführungsform des Füllstandmessgeräts 200 mit einem ersten Prozessor 500, der sehr energiesparend ist, und einem zweiten Prozessor 501, der die Messfunktion in dem zweiten Betriebsmodus 301 übernimmt, dargestellt. Der erste Prozessor 500 kann den zweiten Prozessor in einen Energiesparmodus versetzen und wieder aufwecken, sodass der zweite Prozessor nur in dem zweiten Zustand tatsächlich Energie benötigt.

Der Energiesparmodus kann auch so ausgeprägt sein, dass wie in Figur 6 dargestellt, der erste Prozessor 500 den zweiten Prozessor 501 mittels einer Schalteinrichtung 601 vollständig ausschaltet und von einer Energieversorgung trennt.

### Bezugszeichenliste

- 100: Regenüberlaufbecken
- 101: kontinuierlich messender Sensor
- 102: Grenzstandsensor
- 103: vordefinierter Füllstand
- 104: Schalteinheit
- 200: Füllstandsensor
- 203: Messelektronik
- 204: Batterie
- 300: erster Betriebsmodus
- 301: zweiter Betriebsmodus
- 400: Messwert
- 500: erster Prozessor
- 501: zweiter Prozessor
- 601: Schalteinrichtung

## Patentansprüche

1. Füllstandmessgerät mit einem einzigen kontinuierlich messenden Füllstandsensor (200) und wenigstens einem Prozessor (500) zur Steuerung des Füllstandsensors (200) und zur Auswertung der Messergebnisse,
das Füllstandmessgerät wenigstens einen ersten Betriebsmodus (300) und einen zweiten Betriebsmodus (301) zur Bestimmung des Füllstandes aufweist, wobei das Messgerät in dem ersten Betriebsmodus (300) eine erste Messrate und eine erste Messgenauigkeit aufweist und in dem zweiten Betriebsmodus (301) eine zweite Messrate und eine zweite Messgenauigkeit aufweist, wobei die erste Messrate geringer als die zweite Messrate ist und/oder die erste Messgenauigkeit geringer als die zweite Messgenauigkeit ist,
**dadurch gekennzeichnet, dass**
in einer ersten Alternative das Messgerät einen ersten Prozessor (500) und einen zweiten Prozessor (501) aufweist, wobei der erste Prozessor (500) einen geringeren Energieverbrauch als der zweite Prozessor (501) aufweist und in dem ersten Betriebsmodus (300) der erste Prozessor (500) aktiviert ist und in dem zweiten Betriebsmodus (301) wenigstens der zweite Prozessor (501) aktiviert ist, oder
in einer zweiten Alternative das Füllstandmessgerät einen Prozessor (500, 501) mit wenigstens zwei Betriebszuständen (300, 301) aufweist, wobei der Prozessor (500, 501) in dem ersten Betriebszustand (300) einen geringeren Energieverbrauch als in dem zweiten Betriebszustand (301) aufweist und sich der Prozessor (500, 501) in dem ersten Betriebsmodus (300) in dem ersten Betriebszustand befindet und in dem zweiten Betriebsmodus (301) indem zweiten Betriebszustand befindet, wobei der erste Betriebszustand des Prozessors ein Energiesparzustand mit verringerter Rechenleistung ist, und der zweite Betriebszustand einem regulären Betrieb des Prozessors entspricht, wobei die volle Rechenleistung zur Verfügung steht.

2. Füllstandmessgerät gemäß Anspruch 1,
**dadurch gekennzeichnet, dass** in der ersten Alternative der zweite Prozessor (501) in dem ersten Betriebsmodus (300) deaktiviert ist.

3. Füllstandmessgerät gemäß Anspruch 2,
**dadurch gekennzeichnet, dass** in der ersten Alternative der zweite Prozessor (501) durch den ersten Prozessor (500) aktivierbar ist.

4. Füllstandmessgerät gemäß einem der vorhergehenden Ansprüche,
**dadurch gekennzeichnet, dass** ein Wechsel von dem ersten Betriebsmodus (300) in den zweiten Betriebsmodus (301) bei Unterschreiten eines festgelegten ersten Füllstands (103) und/oder bei Überschreiten eines festgelegten zweiten Füllstands (103) erfolgt und ein Wechsel von dem zweiten Betriebsmodus (301) in den ersten Betriebsmodus (300) bei Überschreiten des festgelegten ersten Füllstands (103) und/oder bei Unterschreiten des festgelegten zweiten Füllstands (103) erfolgt.

5. Füllstandmessgerät gemäß Anspruch 4,
**dadurch gekennzeichnet, dass** der Wechsel unter Berücksichtigung einer Hysterese erfolgt.

6. Füllstandmessgerät gemäß einem der vorhergehenden Ansprüche,
**dadurch gekennzeichnet, dass**
eine Füllstandmessung in dem ersten Betriebsmodus (300) zyklisch, insbesondere alle 1 bis 5 Minuten erfolgt.

7. Füllstandmessgerät gemäß einem der vorhergehenden Verfahren,
**dadurch gekennzeichnet, dass** das Füllstandmessgerät als Radarfüllstandmessgerät ausgebildet ist.

8. Füllstandmessgerät gemäß einem der vorhergehenden Ansprüche,
**dadurch gekennzeichnet, dass** das Füllstandmessgerät als Einweggerät mit einer, insbesondere fest in dem Gerät verbauten Batterie ausgebildet ist.

9. Verfahren zum Betreiben eines Füllstandmessgeräts mit einem einzigen kontinuierlich messenden Füllstandsensor (200) und wenigstens einem Prozessor (500, 501) zur Steuerung des Füllstandsensors (200) und zur Auswertung der Messergebnisse,
wobei das Füllstandmessgerät wenigstens einen ersten Betriebsmodus (300) und einen zweiten Betriebsmodus (301) zur Bestimmung des Füllstandes aufweist, wobei das Messgerät in dem ersten Betriebsmodus (300 mit einer ersten Messrate und einer ersten Messgenauigkeit betrieben wird und in dem zweiten Betriebsmodus (301) mit einer zweiten Messrate und einer zweiten Messgenauigkeit betrieben wird, wobei die erste Messrate geringer als die zweite Messrate ist und/oder die erste Messgenauigkeit geringer als die zweite Messgenauigkeit ist,
**dadurch gekennzeichnet, dass** das Füllstandmessgerät wenigstens einen ersten Prozessor (500) und einen zweiten Prozessor (501) aufweist, wobei der erste Prozessor (500) einen geringeren Energieverbrauch als der zweite Prozessor (501) aufweist, wobei in dem ersten Betriebsmodus (300) der erste Prozessor (500) aktiviert wird und in dem zweiten Betriebsmodus (301) wenigstens der zweite Prozessor (501) aktiviert wird.

10. Verfahren gemäß Anspruch 9,
**dadurch gekennzeichnet, dass**
der zweite Betriebsmodus (301) bei Unterschreiten eines ersten festgelegten Füllstands (103) und/oder bei Überschreiten eines zweiten festgelegten Füllstands (103) aktiviert wird.

11. Verfahren gemäß Anspruch 10,
**dadurch gekennzeichnet, dass** der erste Betriebsmodus (300) bei Überschreiten des ersten Füllstands und/oder bei Unterschreiten des zweiten Füllstands aktiviert wird.

12. Verfahren gemäß Anspruch 11,
**dadurch gekennzeichnet, dass**
der erste Betriebsmodus (300) bei Überschreiten des ersten Füllstands und/oder bei Unterschreiten des zweiten Füllstandes mit einer Hysterese aktiviert wird.

13. Verfahren gemäß einem der Ansprüche 9 bis 12,
**dadurch gekennzeichnet, dass**
das Füllstandmessgerät in dem ersten Betriebsmodus (300) jeweils nach einer Messung für eine vorgegebene Zeit deaktiviert oder in einen Schlafmodus versetzt wird.

## Claims

1. A filling level measuring device with a single continuously measuring filling level sensor (200) and at least one processor (500) for controlling the filling level sensor (200) and for evaluating the measurement results, the filling level measuring device has at least one first operating mode (300) and one second operating mode (301) for determining the filling level, wherein the measuring device has in the first operating mode (300) a first measuring rate and a first measuring accuracy and in the second operating mode (301) a second measuring rate and a second measuring accuracy, wherein the first measuring rate is lower than the second measuring rate and/or the first measurement accuracy is lower than the second measurement accuracy,
**characterized in that**
in a first alternative, the measuring device has a first processor (500) and a second processor (501), wherein the first processor (500) has a lower energy consumption than the second processor (501), and the first processor (500) is activated in the first operating mode (300), and at least the second processor (501) is activated in the second operating mode (301), or
in a second alternative, the filling level measuring device has a processor (500, 501) with at least two operating states (300, 301), wherein the processor (500, 501) has a lower energy consumption in the first operating state (300) than in the second operating state (301), and the processor (500, 501) is in the first operating state in the first operating mode (300), and is in the second operating state in the second operating mode (301), wherein the first operating state of the processor is an energy-saving state with a reduced computing power, and the second operating state corresponds to a regular operation of the processor with the full computing power being available.

2. The filling level measuring device according to claim 1,
**characterized in that**
in the first alternative, the second processor (501) is deactivated in the first operating mode (300).

3. The filling level measuring device according to claim 2,
**characterized in that**
in the first alternative, the second processor (501) can be activated by the first processor (500).

4. The filling level measuring device according to any one of the preceding claims,
**characterized in that** a change from the first operating mode (300) into the second operating mode (301) takes place when a predetermined first filling level (103) is fallen short of and/or a predetermined second filling level (103) is exceeded, and a change from the second operating mode (301) into the first operating mode (300) takes place when the predetermined first filling level (103) is exceeded and/or the predetermined second filling level (103) is fallen short of.

5. The filling level measuring device according to claim 4,
**characterized in that** the change takes place taking into account a hysteresis.

6. The filling level measuring device according to any one of the preceding claims,
**characterized in that** a filling level measurement occurs cyclically in the first operating mode (300), in particular every 1 to 5 minutes.

7. The filling level measuring device according to any one of the methods,
**characterized in that** the filling level measuring device is configured as a radar filling level measuring device.

8. The filling level measuring device according to any one of the preceding claims,
**characterized in that** the filling level measuring device is configured as a single-use device with a battery that is installed in the device, in particular in a fixed manner.

9. A method for operating a filling level measuring device with a single continuously measuring filling level sensor (200) and at least one processor (500, 501) for controlling the filling level sensor (200) and for evaluating the measurement results,
wherein the filling level measuring device has at least one first operating mode (300) and one second operating mode (301) for determining the filling level, wherein the measuring device is operated in the first operating mode (300) with a first measuring rate and a first measuring accuracy and is operated in the second operating mode (301) with a second measuring rate and a second measuring accuracy, wherein the first measuring rate is lower than the second measuring rate and/or the first measurement accuracy is lower than the second measurement accuracy,
**characterized in that** the filling level measuring device has at least one first processor (500) and one second processor (501), wherein the first processor (500) has a lower energy consumption than the second processor (501), wherein the first processor (500) is activated in the first operating mode (300), and at least the second processor (501) is activated in the second operating mode (301).

10. The method according to claim 9,
**characterized in that** the second operating mode (301) is activated when a predetermined first filling level (103) is fallen short of and/or a predetermined second filling level (103) is exceeded.

11. The method according to claim 10,
**characterized in that** the first operating mode (300) is activated when the predetermined first filling level is exceeded and/or the predetermined second filling level is fallen short of.

12. The method according to claim 11,
**characterized in that** the first operating mode (300) is activated with a hysteresis when the predetermined first filling level is exceeded and/or the predetermined second filling level is fallen short of.

13. The method according to any one of the claims 9 to 12,
**characterized in that** in the first operating mode (300), the filling level measuring device, in each case after a measurement, is deactivated for a predetermined period of time or switched into a sleep mode.

## Revendications

1. Appareil de mesure de niveau de remplissage comprenant un seul capteur de niveau de remplissage (200) à mesure continue et au moins un processeur (500) destiné à commander le capteur de niveau de remplissage (200) et à évaluer les résultats de mesure, dans lequel l'appareil de mesure de niveau de remplissage présente au moins un premier mode de fonctionnement (300) et un deuxième mode de fonctionnement (301) pour déterminer le niveau de remplissage, dans lequel l'appareil de mesure présente un premier taux de mesure et une première précision de mesure dans le premier mode de fonctionnement (300) et présente un deuxième taux de mesure et une deuxième précision de mesure dans le deuxième mode de fonctionnement (301), le premier taux de mesure étant inférieur au deuxième taux de mesure et/ou la première précision de mesure est inférieure à la deuxième précision de mesure,
**caractérisé par le fait que**
dans une première alternative, l'appareil de mesure comprend un premier processeur (500) et un deuxième processeur (501), dans lequel le premier processeur (500) consomme moins d'énergie que le deuxième processeur (501) et le premier processeur (500) est activé dans le premier mode de fonctionnement (300) et au moins le deuxième processeur (501) est activé dans le deuxième mode de fonctionnement (301), ou, dans une deuxième alternative, l'appareil de mesure de niveau de remplissage comprend un processeur (500, 501) ayant au moins deux états de fonctionnement (300, 301), dans lequel le processeur (500, 501) consomme moins d'énergie dans le premier état de fonctionnement (300) que dans le deuxième état de fonctionnement (301) et le processeur (500, 501) est dans le premier état de fonctionnement dans le premier mode de fonctionnement (300) et est dans le deuxième état de fonctionnement dans le deuxième mode de fonctionnement (301), dans lequel le premier état de fonctionnement du processeur étant un état d'économie d'énergie avec une puissance de calcul réduite, et le deuxième état de fonctionnement correspond à un fonctionnement régulier du processeur, toute la puissance de calcul étant disponible.

2. Appareil de mesure de niveau de remplissage selon la revendication 1, **caractérisé par le fait que**, dans la première alternative, le deuxième processeur (501) est désactivé dans le premier mode de fonctionnement (300).

3. Appareil de mesure de niveau de remplissage selon la revendication 2, **caractérisé par le fait que**, dans la première alternative, le deuxième processeur (501) peut être activé par le premier processeur (500).

4. Appareil de mesure de niveau de remplissage selon l'une quelconque des revendications précédentes, **caractérisé par le fait qu'**un passage du premier mode de fonctionnement (300) au deuxième mode de fonctionnement (301) a lieu lorsqu'un premier niveau de remplissage déterminé (103) n'est pas atteint et/ou lorsqu'un deuxième niveau de remplissage déterminé (103) est dépassé, et un passage du deuxième mode de fonctionnement (301) au premier mode de fonctionnement (300) a lieu lorsque le premier niveau de remplissage déterminé (103) est dépassé et/ou lorsque le deuxième niveau de remplissage déterminé (103) n'est pas atteint.

5. Appareil de mesure de niveau de remplissage selon la revendication 4, **caractérisé par le fait que** le passage se fait en tenant compte d'une hystérésis.

6. Appareil de mesure de niveau de remplissage selon l'une quelconque des revendications précédentes, **caractérisé par le fait qu'**une mesure du niveau de remplissage dans le premier mode de fonctionnement (300) a lieu cycliquement, en particulier toutes les 1 à 5 minutes.

7. Appareil de mesure de niveau de remplissage selon l'une quelconque des revendications précédentes, **caractérisé par le fait que** l'appareil de mesure de niveau de remplissage est réalisé en tant qu'appareil de mesure de niveau de remplissage par radar.

8. Appareil de mesure de niveau de remplissage selon l'une quelconque des revendications précédentes, **caractérisé par le fait que** l'appareil de mesure de niveau de remplissage est conçu en tant qu'appareil jetable avec une batterie, en particulier installée à demeure dans l'appareil.

9. Procédé destiné à faire fonctionner un appareil de mesure de niveau de remplissage comprenant un seul capteur de niveau de remplissage (200) à mesure continue et au moins un processeur (500, 501) destiné à commander le capteur de niveau de remplissage (200) et à évaluer les résultats de mesure, dans lequel l'appareil de mesure de niveau de remplissage présente au moins un premier mode de fonctionnement (300) et un deuxième mode de fonctionnement (301) pour déterminer le niveau de remplissage, dans lequel on fait fonctionner l'appareil de mesure dans le premier mode de fonctionnement (300) à un premier taux de mesure et avec une première précision de mesure et dans le deuxième mode de fonctionnement (301) à un deuxième taux de mesure et avec une deuxième précision de mesure, le premier taux de mesure étant inférieur au deuxième taux de mesure et/ou la première précision de mesure est inférieure à la deuxième précision de mesure, **caractérisé par le fait que** l'appareil de mesure de niveau de remplissage comprend au moins un premier processeur (500) et un deuxième processeur (501), dans lequel le premier processeur (500) présente une consommation d'énergie inférieure à celle du deuxième processeur (501), dans lequel le premier processeur (500) est activé dans le premier mode de fonctionnement (300) et au moins le deuxième processeur (501) est activé dans le deuxième mode de fonctionnement (301).

10. Procédé selon la revendication 9, **caractérisé par le fait que** le deuxième mode de fonctionnement (301) est activé lorsqu'un premier niveau de remplissage déterminé (103) n'est pas atteint et/ou lorsqu'un deuxième niveau de remplissage déterminé (103) est dépassé.

11. Procédé selon la revendication 10, **caractérisé par le fait que** le premier mode de fonctionnement (300) est activé lorsque le premier niveau de remplissage est dépassé et/ou lorsque le deuxième niveau de remplissage n'est pas atteint.

12. Procédé selon la revendication 11, **caractérisé par le fait que** le premier mode de fonctionnement (300) est activé avec une hystérésis lorsque le premier niveau de remplissage est dépassé et/ou lorsque le deuxième niveau de remplissage n'est pas atteint.

13. Procédé selon l'une quelconque des revendications 9 à 12, **caractérisé par le fait que**, dans le premier mode de fonctionnement (300), respectivement après une mesure, l'appareil de mesure de niveau de remplissage est désactivé pendant une durée prédéterminée ou est mis en mode veille.
